## Europäisches Patentamt
## European Patent Office
## Office européen des brevets

(19)

(11) Publication number: **0 048 561**
**B1**

(12)

# EUROPEAN PATENT SPECIFICATION

(45) Date of publication of the patent specification:
18.04.84

(51) Int. Cl.³: **G 02 B 7/26**

(21) Application number: **81304060.7**

(22) Date of filing: **07.09.81**

(54) **An optical waveguide connector assembly.**

(30) Priority: **18.09.80 US 188395**

(43) Date of publication of application:
**31.03.82 Bulletin 82/13**

(45) Publication of the grant of the patent:
**18.04.84 Bulletin 84/16**

(84) Designated Contracting States:
**AT BE CH DE FR GB IT LI NL SE**

(56) References cited:
**FR - A - 2 413 674**
**US - A - 4 204 306**

(73) Proprietor: **AMP INCORPORATED, Eisenhower Boulevard, Harrisburg Pennsylvania (US)**

(72) Inventor: **Schumacher, William Ludlow, 405 Elm Avenue, Hershey Pennsylvania 17033 (US)**

(74) Representative: **Gray, Robin Oliver et al, BARON & WARREN 18 South End Kensington, London W8 5BU (GB)**

## An optical waveguide connector assembly

This invention relates to an optical waveguide connector assembly providing for localization of adhesive material in a forward end of the assembly.

A typical waveguide connector assembly is disclosed in U.S. Patent 4 204 306, comprising a terminal end, an optical waveguide within a bore of a resilient jig, and aligned concentric to the outer dimension of the terminal end, and the resilient jig uniformly compressed to contract about the optical waveguide. Resultingly, the waveguide is held concentric within the outer dimension of the terminal end and is bonded therein by a bonding agent, for example, an adhesive material.

While the above connector generally centers the waveguide, certain shortcomings are present. First, in positioning the waveguide concentric with the terminal end of the connector, the effectiveness of an optical coupling is dependent upon insertion of the terminal end of the connector within an encircling splice bushing, preserving thight tolerances between the terminal end and the inner diameter of the splice bushing. Secondly, the above connector does not confine the bonding agent to the forward end of the waveguide. Consequently, the bonding agent tends to migrate down the cable, increasing rigidity along the length of the waveguide and the likelihood of its breakage. Accordingly, the industry has been in need of an SMA-style optical waveguide connector that should function relatively independent of tolerance variations between interfitted parts. In particular, the connector should provide improved centering of an optical waveguide in the connector and should localize and prevent migration of adhesive material.

According to the present invention, this problem is solved by an optical waveguide connector assembly comprising an optical waveguide cable, a body portion with a profiled axial bore, a radially compressible resilient ferrule having an axial bore, an optical waveguide of the cable projecting along the bores of the body portion and the resilient ferrule, an adhesive material securing the waveguide in the bores, an axially forward end of the waveguide coplanar with an axially forward end of the resilient ferrule upon radial compression thereof, and a coupling ring assembled over the body portion which is characterized in that an inner ferrule is inside the body portion, the waveguide projects axially along a passageway of the inner ferrule and an axially forward end of the inner ferrule, and this forward end sealably registers within the profiled bore defining a sealed chamber in the profiled bore confining the adhesive material.

A connector assembly according to an embodiment of the present invention provides an inner resilient ferrule assembled over an optical waveguide. The ferrule and waveguide are assembled into a hollow body, with the forward end of the ferrule sealably wedged in the tubular body to seal against migration of adhesive material along the waveguide. Alignment of the waveguide along a major axis of the connector assembly is accomplished by holding the waveguide in an alignment ferrule mounted on the forward end of tubular body, and the waveguide trimmed flush with a forward end of the alignment ferrule.

An embodiment of the present invention provides a connector assembly of the kind described in the previous paragraph, and characterized in that a resilient inner ferrule is inside a hollow body, an optical waveguide projects axially along a passageway of the inner ferrule and projects through a forward end of the inner ferrule, the forward end sealably registers in the body and over the waveguide, defining a sealed chamber confining the adhesive material in the forward end of the body, and sealing against migration of adhesive material along the waveguide.

In a connector assembly according to the invention, the optical waveguide is part of an optical waveguide cable having an inner jacket, encircling the waveguide, strength fibers encircle the inner jacket and an outer jacket covers the fibers. The inner jacket enters the above described inner ferrule together with the waveguide. The strength fibers overlie the body in which the inner ferrule sealably registers, and a crimping ferrule encircles the strength fibers trapping the fibers against the body. Further, the crimping ferrule radially grips the outer jacket.

An object of the present invention is to provide a connector assembly characterized in that a resilient inner ferrule is inside a hollow body, an optical waveguide projects axially along a passageway of the inner ferrule and projects through a forward end of the inner ferrule, the forward end sealably registers in the body and over the waveguide, defining a sealed chamber confining the adhesive material in the forward end of the body, and sealing against migration of adhesive material along the waveguide.

A further object of the present invention is to provide an optical waveguide connector assembly comprising; a contact body having a profiled forward end of smaller outer diameter, and an axial passageway for receiving an optical waveguide therethrough; a resilient and radially compressive alignment ferrule having a centrally disposed aperture therethrough for closely receiving said waveguide therein with a forward end surface of said waveguide located coplanar with a forward face of said alignment ferrule, and said ferrule having a counter bore rearward of said aperture for closely receiving said forward end of said contact body.

Yet a further object of the present invention is to provide an optical waveguide connector assembly having means for localizing the application of adhesive material.

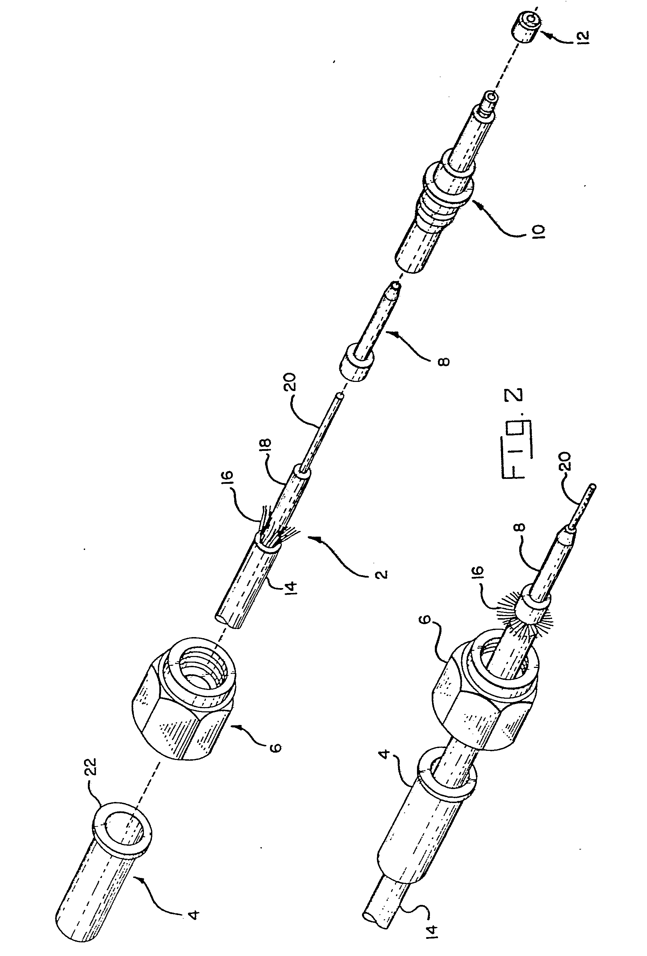

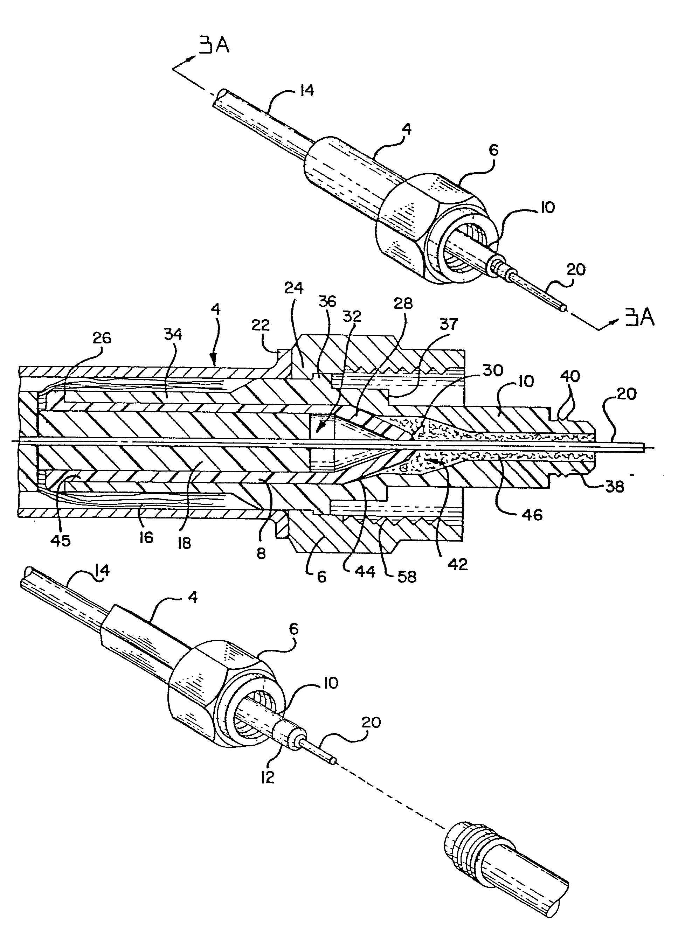

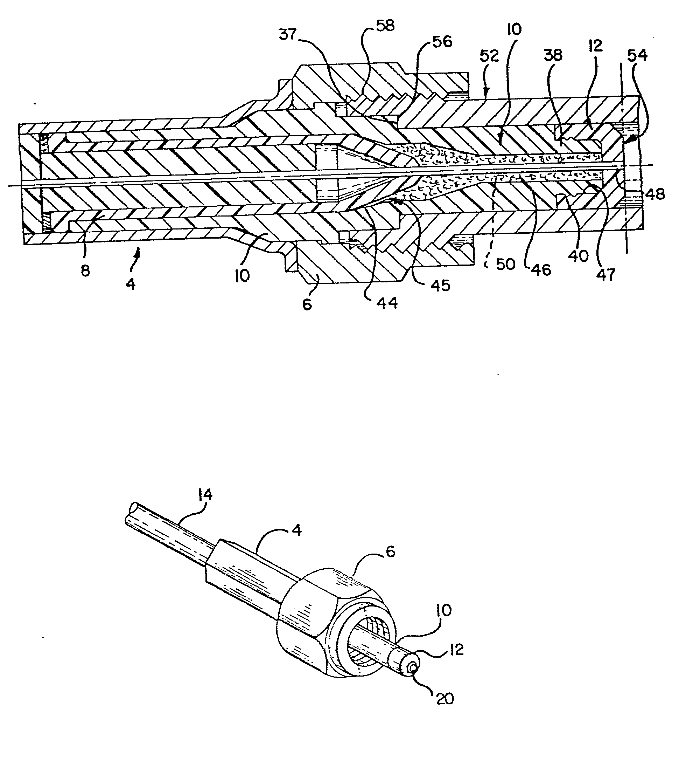

Figure 1 is an exploded perspective view of the subject optical waveguide connector. Figure 2 is a perspective view of the subject optical waveguide connector in a partially assembled condition. Figure 3 is a perspective view of the subject optical waveguide connector in a condition of partial assembly subsequent to that illustrated in Figure 2. Fugure 3A is a longitudinal section view through the partially assembled connector illustrated in Figure 3, taken along hte line 3A–3A. Figure 4 is a perspective view of the subject optical waveguide connector, with the centering alignment ferrule affixed to the forward end of the contact body, and the optical waveguide projecting therethrough. Figure 5 is a longitudinal section view through a fully assembled optical waveguide connector terminated into a splice bushing of the present invention. Figure 6 is a perspective view of the subject optical waveguide connector in the fully assembled condition.

Referring first to Figure 1, the subject connector is an assembly 2 and comprises a crimping ferrule 4, a coupling nut 6, a primary ferrule 8, a contact body 10, and an alignment ferrule 12. The subject invention terminates an optical waveguide cable of the general type comprising, an outer jacket 14, a coaxial sleeve of strength fibers 16, an inner jacket 18, and an optical waveguide or fiber 20.

With continued reference to Figures 1 and 3A, the crimping ferrule 4 includes an axially forward disposed external annular flange 22. The coupling nut 6 is configured with an internal annular flange 24 at an axially rearward end thereof. The primary ferrule 8 likewise provides an annular shoulder 26 at an axially rearward end thereof, and an inwardly tapered axially forward end 28. An aperture 30 extends through the forward end 28 of the primary ferrule, and is dimensioned substantially to the outer diameter of the optical waveguide 20. An axial passageway 32, extending the length of the primary ferrule 8, is dimensioned closely to encircle and receive an end portion of the inner jacket 18 surrounding the waveguide 20.

The contact body 10 is configured with an axially rearward tubular sleeve portion 34, an external radially outward annular flange 36, an axially forwardly directed external annular shoulder 37, a reduced diameter axially forward nose portion 38, having external, annular circumferential protrusions 40 formed therearound. A profiled bore 42 extends the entire axial length of the contact body 10, and consists of axially rearward, generally larger diameter portion 45 and an axially forward smaller diameter bore chamber 46. Inward radially, tapered sidewalls 44 define that portion of the axial bore 42 extending between the portion 45 and the chamber 46.

As best shown by Figure 5, the alignment ferrule 12 is of stepped cylindrical configuration, including a relatively larger diameter counterbore portion 47 communicating with a smaller diameter centering aperture 48. It will be appreciated that the centering aperture 48 is dimensioned to receive and encircle closely the optical waveguide 20, and the counterbore inner diameter is dimensioned to enable mounting of the alignment ferrule 12 over the forward nose portion 38. The alignment ferrule 12 is formed from a resilient, radially compressible material, for example a thermosetting plastic. The contact body 10, coupling nut 6, and crimping ferrule 4 are formed from any one of a number of suitable metals The primary ferrule 8 is formed of plastics or metallic material.

Referring now to Figures 1, 2, 3 and 3A, the subject optical waveguide connector is assembled as follows. The optical waveguide cable is inserted first through the crimping ferrule 4 and the coupling nut 6. Thereafter, the optical waveguide 20 is inserted along and through the primary ferrule 8 to project forwardly therefrom. The inner jacket 18 of the waveguide cable is positioned within the axial passageway 32 of the primary ferrule 8 as shown. Subsequently the primary ferrule 8 is inserted into the rearward larger diameter portion 45 of the contact body axial bore 42. The tapered forward end 28 of the primary ferrule 8 wedges into the inward taper of the contact body tapered walls 44. It will be appreciated from Figure 3A that the internal annular flange 24 of the coupling nut 6 is intended for axial abutment against the external annular flange 36 of the contact body 10. It will further be noted that the external flange 22 of the crimping ferrule 4 abuts axially against the coupling nut 6, and further entraps radially the sleeve of strength fibers 16 against the outer surface of the contact body portion 34. Thereafter, the cylindrical body of ferrule 4 is crimped to securely clamp the strength fibers 16 against the contact body 10.

The forward length of the optical waveguide 20 protrudes axially forward through the forward bore chamber 46 and emerges from the axially forward end of the contact body 10. By way of reference to Figure 5, quantity of adhesive material 50 is injected into the forward boare chamber 46 of the contact body 10, and encapsulates the length of the optical waveguide 20 extending therethrough. It will be readily appreciated that the wedging interference engagement between the tapered forward end 28 of the primary ferrule 8 and the tapered walls 44 of the contact body 10, sealably encircles the forward end 28 over the waveguide and against the body 10 and prevents any migration of the adhesive material axially rearward along the optical waveguide 20, and serves to localize the collection of adhesive material at the forward end of the assembly where needed. The adhesive material 50 may be selected from the group of commonly available epoxy materials, or the like.

Proceeding with reference to Figures 5 and 6, the resilient alignment ferrule 12 is then mounted over the forward nose portion 38 of the contact body 10, and establishes an encircling interference fit to seal the adhesive material 50. The interference protrusions 40 embed into the resilient ferrule 12 further to retain said alignment ferrule 12. The forward end of the optical waveguide 20 protrudes through the centering aperture 38 of the alignment ferrule 12, and is thereby held and positioned on the major axis of the assembly. Subsequently, the epoxy 50 is permitted to cure, and the forward end of waveguide 20 is ground and polished back coplanar with the forward end of the alignment ferrule 12. Thus, the optical waveguide 20 is referenced coaxially with the outer diameter of forward nose portions 38 of the contact body 10, by operation of the alignment ferrule 12 through which the waveguide protrudes. Such an arrangement ensures that the optical waveguide is fixedly held on a major axis of the connector assembly.

With continued reference to Figures 5 and 6, a coupling bushing 52 is illustrated for use in the mating of a pair of connectors configured as described above. The coupling bushing 52 is generally cylindrical and provides a centering bore 54 extending along the intermediate length thereof. The centering bore 54 has an interior dimension such that the alignment ferrule 12 may be inserted therein with interference engagement. An internal step 56 is further provided, to terminate the insertion of the contact body 10 into the centering bore 54. It will be apparent that the coupling nut 6 engages exterior threads 58 of the coupling bushing 52 to influence the contact body 10 further into the coupling bushing bore 54, until the external shoulder 37 of the contact body abuts against the internal step 56 of the bushing 52.

The internal dimension of the bore 54 is such that radially compressive force is exerted upon the alignment ferrule 12 as the contact body 10 is inserted into the bushing. Resilient radial compression of the ferrule 12, which is caused by interference engagement with the bushing 52, serves to uniformly relocate the forward nose portion 38 of the contact body 10 on the center axis of the coupling bushing. Thus, by operation of the resilient alignment ferrule 12, the forward nose portion 38 of the contact body 10 is positioned on the axis of the coupling bushing. Moreover, since the alignment ferrule 12 further serves to preserve the optical waveguide 20 in fixed coaxial reference with the outer surface diameter of the forward nose portion 38, the optical waveguide 20 is likewise thereby fixedly located on the axis of the coupling bushing 52. A like configured optical waveguide connector, structured identically as described above and illustrated in Figure 5, is intended to be matingly inserted into the opposite end of the coupling bushing 52. The opposite mating connector half undergoes similar alignment by operation of the similar resilient alingment ferrule 12 component thereof, and is thereby positioned on the axis of the coupling bushing 52. Accordingly, both mating connector halves (only one of which can be seen in Figur 5) are resiliently relocated to the axis of the coupling bushing, and the optical waveguides extending therethrough are thereby colinearly and axially aligned.

From the foregoing some general observances will become apparent. First the subject optical waveguide connector consists of relatively few component parts. A single splice bushing comprises the only component which is not identically incorporated into each connector half. Secondly, part-to-part tolerances between the component parts of each connector half and between the component parts of opposite connector halves, are not critical. This is due to the resilient operation of the alignment ferrules, which ensure coaxial location of the connector halves independently of the part-to-part specifications, and due to the controlled distance which each connector unit is inserted into a splice bushing. Also, it will be apparent that the subject invention may be economically produced due to the relatively small number of component parts which have non-critical dimensions, and can be readily assembled without the use of elaborate assembly tooling.

Finally, in viewing Figure 5, it will be recognized that the waveguide is held on the major axis of the contact body 10 at two distinct and distant points; namely, at the forward end of the primary ferrule 8 where the waveguide protrudes therefrom, and at the alignment ferrule 12 where the forward end of the waveguide is held within the ferrule aperture 48. This distant two point alignment scheme achieves better angular alignment of the waveguide axis than a system which holds the waveguide at one point, or at two relatively proximate points.

## Claims

1. An optical waveguide connector assembly comprising, an optical waveguide cable, a body portion (10) with a profiled axial bore (42), a radially compressible resilient ferrule (12) having an axial bore (48), an optical waveguide (20) of the cable projecting along the bores (42) (48) of the body portion (10) and the resilient ferrule (12), an adhesive material (50) securing the waveguide (20) in the bores (42) (48), an axially forward end of the waveguide (20) coplanar with an axially forward end of the resilient ferrule (12) and located along a major axis of the resilient ferrule (12) upon radial compression thereof, and a coupling ring (6) assembled over the body portion (10) characterized in that an inner ferrule (8) is inside the body portion (10), the waveguide (20) projects axially along a passageway (32) of the inner ferrule (8) and an axially forward end (28) of the inner ferrule (8) and this forward end (28) sealably registers within the profiled bore (42) defining a sealed chamber (46) in the profiled bore (42) confining the adhesive material (50).

2. An optical waveguide connector assembly according to Claim 1, characterized in that the inner ferrule (8) encircles and receives an end portion of an inner jacket (18) of the cable encircling the waveguide (20), and strength members (16) of the cable encircle the body portion (10), and a crimping ferrule encircles the body portion (10) and clamps the strength members (16) against the body portion (10).

3. An optical waveguide connector assembly according to either Claims 1 or 2, characterized in that the end (28) of the inner ferrule (8) has an aperture (30) through which the waveguide (20) projects, and with the waveguide (20) projecting through the aperture (30), the end (28) of the inner ferrule is compressed against tapered walls (44) of the body portion (10).

4. An optical waveguide connector assembly according to Claim 3, characterized in that the end (28) of the inner ferrule (8) is tapered.

5. An optical waveguide connector assembly according to either Claims 1, 2, or 3, characterized in that the body portion (10) has a reduced outer diameter axially forward end (38), the resilient ferrule (12) has a counterbore (47) fitted over this end (38), and this end (38) includes circumferential protrusions (40) imbedded into the resilient ferrule (12).

## Patentansprüche

1. Verbinderanordnung für optische Wellenleiter, mit einem optischen Wellenleiterkabel, einem eine profilierte Axialbohrung (42) aufweisenden Körperabschnitt (10), einer radial zusammenpressbaren elastischen Zwinge (12) mit einer Axialbohrung (48), wobei ein optischer Wellenleiter (20) des Kabels entlang der Bohrungen (42, 48) des Körperabschnitts (10) und der elastischen Zwinge (12) verläuft und ein Klebstoff (50) den Wellenleiter (20) in den Bohrungen (42, 48) festlegt, ein in axialer Richtung vorderes Ende des Wellenleiters (20) mit einem in axialer Richtung vorderen Ende der elastischen Zwinge (12) in einer Ebene liegt und nach deren radialem Zusammenpressen entlang einer Hauptachse der elastischen Zwinge verläuft, und mit einem über dem Körperabschnitt (10) angeordneten Kupplungsring (6), dadurch gekennzeichnet, dass innerhalb des Körperabschnitts (10) eine Innenzwinge (8) vorgesehen ist, dass der Wellenleiter (20) axial einen Durchgang (32) der Innenzwinge (8) und ein in axialer Richtung vorne gelegenes Ende (28) der Innenzwinge (8) durchsetzt, und dass dieses vordere Ende (28) abdichtbar in der profilierten Bohrung (42) liegt und eine abgedichtete Kammer (46) in der profilierten Bohrung (42) bildet, die den Klebstoff (50) einschliesst.

2. Verbinderanordnung für optische Wellenleiter nach Anspruch 1, dadurch gekennzeichnet, dass die Innenzwinge (8) einen Endabschnitt eines den Wellenleiter (20) umgebenden Innenmantels (18) des Kabels umgibt und aufnimmt, dass Verstärkungselemente (16) des Kabels den Körperabschnitt (10) umgeben, und dass eine Quetschzwinge den Körperabschnitt (10) umgibt und die Verstärkungselemente (16) gegen den Körperabschnitt (10) klemmt.

3. Verbinderanordnung für optische Wellenleiter nach Anspruch 1 oder 2, dadurch gekennzeichnet, dass das Ende (28) der Innenzwinge (8) eine Öffnung (30) aufweist, durch die der Wellenleiter (20) vorspringt, und dass bei durch die Öffnung (30) vorspringendem Wellenleiter (20) das Ende (28) der Innenzwinge gegen konische Wände (44) des Körperabschnitts (10) gepresst wird.

4. Verbinderanordnung für optische Wellenleiter nach Anspruch 3, dadurch gekennzeichnet, dass das Ende (28) der Innenzwinge (8) konisch ausgebildet ist.

5. Verbinderanordnung für optische Wellenleiter nach Anspruch 1, 2 oder 3, dadurch gekennzeichnet, dass der Körperabschnitt (10) ein in axialer Richtung vorderes Ende mit reduziertem Aussendurchmesser aufweist, dass die elastische Zwinge (12) eine auf dieses Ende aufgepasste Gegenbohrung (47) aufweist, und dass dieses Ende (38) Umfangsvorsprünge (40) aufweist, die in die elastische Zwinge (12) eingebettet sind.

## Revendications

1. Assemblage d'un connecteur de guide d'ondes optiques comprenant un câble guide d'ondes optiques, un corps (10) qui présente un alésage axial profilé (42), une virole élastique (12) compressible radialement présentant un alésage axial (48), un guide d'ondes optiques (20) du câble dépassant le long des alésages (42, 48) du corps (10) et de la virole élastique (12), une matière adhésive (50) fixant le guide d'ondes (20) dans les alésages (42), (48), une extrémité axiale avant du guide d'ondes (20) coplanaire à une extrémité axiale avant de la virole élastique (12) et disposée le long d'un grand axe de la virole élastique (12) à la suite d'une compression radiale de celle-ci, et une bague (6) d'accouplement assemblée sur le corps (10), caractérisé en ce qu'une virole intérieure (8) est disposée à l'intérieur du corps (10), le guide d'ondes (20) avance axialement le long d'un passage (32) de la virole intérieure (8) et d'une extrémité axiale avant (28) de la virole intérieure (8), et cette extrémité avant (28) se positionne de manière étanche dans l'alésage profilé (42) définissant une chambre étanche (46) dans l'alésage profilé (42), retenant la matière adhésive (50).

2. Assemblage d'un connecteur de guide d'ondes optiques selon la revendication 1, caractérisé en ce que la virole intérieure (8) entoure et reçoit une partie extrême d'une gaine intérieure (18) du câble entourant le guide d'ondes (20), et des éléments (16) de renfort du câble entourent le corps (10), et une virole de sertissage entoure le corps (10) et bride les éléments (16) de renfort contre le corps (10).

3. Assemblage d'un connecteur de guide d'ondes optiques selon l'une des revendications 1 ou 2, caractérisé en ce que l'extrémité (28) de la virole intérieure (8) présente une ouverture (30) par laquelle le guide d'ondes (20) dépasse, et, le guide d'ondes (20) dépassant par l'ouverture (30), l'extrémité de la virole intérieure (28) est comprimée contre des parois coniques (44) du corps (10).

4. Assemblage d'un connecteur de guide d'ondes optiques selon la revendication 3, caractérisé en ce que l'extrémité (28) de la virole intérieure (8) est conique.

5. Assemblage d'un connecteur de guide d'ondes optiques selon l'une quelconque des revendications 1, 2 ou 3, caractérisé en ce que le corps

**0 048 561**

(10) présente une extrémité axiale avant (38) de diamètre extérieur réduit, la virole élastique (12) présente un contre-alésage (47) emmanché sur cette extrémité (38), et cette extrémité (38) comporte des saillies circonférentielles (40) encastrées dans la virole élastique (12).

Fig. 2

9

11